# EUROPEAN PATENT APPLICATION

(11) **EP 0 685 284 A1**
(43) Date of publication of application: **06.12.1995**
(21) Application number: 94201595.9
(22) Date of filing: 03.06.1994
(51) Int. Cl.: B23D 51/02, B23D 51/04, B25H 1/04, B25H 1/08, B27G 5/02

(54) **Bench saw workpiece clamp**

(71) Applicant: Chang, Li-Lin, Tam-Shui Town, Taipei Hsien (TW)
(72) Inventor: Chang, Li-Lin, Tam-Shui Town, Taipei Hsien (TW)
(74) Representative: Hooiveld, Arjen Jan Winfried

(57) **Abstract**

A bench saw including two symmetrical stands (11) joined together, two screw rod mounts (20) mounted on the symmetrical stands (11) at the top, a front table board (30) horizontally fixedly mounted on the screw rod mounts (20) at a front side, a rear table board (40) coupled to two slide plates (41) on the screw rod mounts (20) and horizontally moved relative to the front table board (30) and alternatively set at the horizontal or vertical position, a saw rack (50) mounted on the front table board (30) at the bottom, and a hacksaw (60) movably supported on the saw rack (50) and disposed above the front table board (30) and adjusted by the saw rack (50) to a desired elevation and tilt angle, a plurality of jaw plates (70) respectively mounted on the front and rear table boards (30;40) and having each a plurality of grooves (71) rising one behind another for supporting the workpiece at a desired tilt angle, and a workpiece fixture (80) mounted on the front side of the front table board (30) to hold down the workpiece.

## Description

### BACKGROUND OF THE INVENTION

The present invention relates to a bench saw which can be conveniently adjusted to change the elevation and the cutting angle of the saw blade and, which can be used as a work bench when the hacksaw thereof is dismantled.

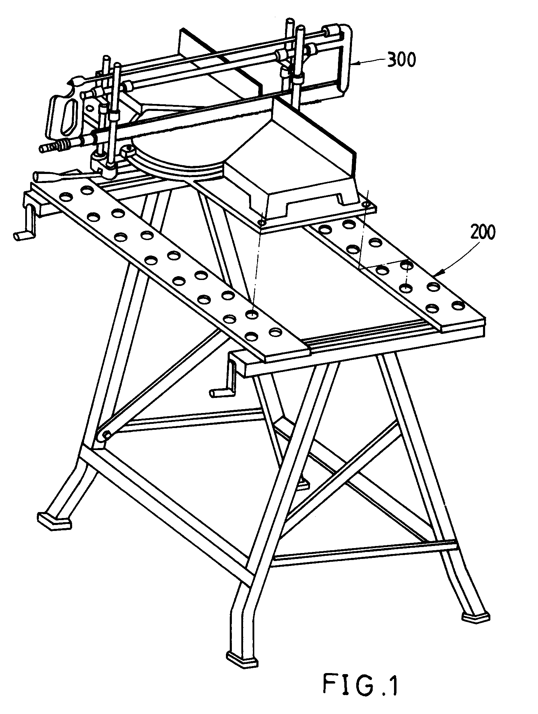

Referring to Figure 1, a regular work bench 200 generally comprises a fixed table board and at least one movable table board driven by screw rods to move relative the fixed table board for clamping the workpiece. This structure of work bench works to support the workpiece only. When to cut workpieces, a mitre saw 300 shall be used and fixed to the work bench for cutting workpieces. A mitre saw for cutting a mitre comprises generally a table having a horizontal supporting plane and a vertical supporting plane, a saw rack horizontally pivotally connected to the table at the bottom and locked at the desired position to hold a hacksaw, and a tilt control device mounted on the saw rack to adjust the tilt angle of the hacksaw. This structure of mitre saw must be fixed to a work bench so as that the operator can operate the hacksaw conveniently and comfortably. In order to secure the table of the mitre saw in position, a clamping device or the like must be used to hold down the table of the mitre saw on the work bench.

There is also known a mitre saw which has a third supporting plane (in addition to the horizontal and vertical supporting planes) to hold the workpiece in any of a series of tilt angles. The third supporting plane is formed of the top edge of the vertical supporting plane and grooves on the horizontal supporting plane. Because the horizontal supporting plane must be maintain smooth, the grooves on the horizontal supporting plane must be made shadow. However, when the workpiece is supported at a tilt, it may slip easily.

### SUMMARY OF THE INVENTION

The present invention has been accomplished to provide a bench saw which eliminates the aforesaid problems.

According to one aspect of the present invention, the bench saw comprises two symmetrical stands joined together, one pair of screw rod mounts, a front table board, a rear table board, a saw rack, a hacksaw, and a workpiece fixture. Therefore, the bench saw has the function of a regular mitre saw as well as the function of a regular work bench.

According to another aspect of the present invention, the screw rod mounts are mounted on the symmetrical stands at the top; the front table board is horizontally fixedly mounted on the screw rod mounts at a front side; the rear table board is coupled to two slide plates and moved forwards and backwards relative to the front table board; the saw rack is mounted on the front table board at the bottom; the hacksaw is movably supported on the saw rack and disposed above said front table board; the jaw plates are respectively mounted on the front and rear table boards; the workpiece fixture is mounted on a front side of the front table board to hold down the workpiece. The rear table board can be alternative set in the horizontal or vertical position according to the desired type of the job to be done.

According to still another aspect of the present invention, the jaw plates have each a plurality of grooves rising one behind another so that the workpiece can be supported stably at any of a series of tilt angles.

According to still another aspect of the present invention, the saw rack comprises a suspension arm to hold the hacksaw by guide rods, and a link horizontally pivotally connected to the front table board at the bottom to hold the suspension arm. By changing the position of the link and the guide rods, the cutting angle of the hacksaw is adjusted.

According to still another aspect of the present invention, the workpiece fixture comprises a clamp screw, a locating rod fastened to a screw hole on a front side of said front table board, a L-shaped slide bar turned about the locating rod and fixed in position by a tightening up screw to hold the clamping screw by a guide block. By changing the position of the L-shaped slide bar on the locating rod, the clamp screw is adjusted to hold down the workpiece at the desired tilt angle.

### BRIEF DESCRIPTION OF THE DRAWINGS

Fig. 1 shows a mitre saw supported on a work bench according to the prior art;

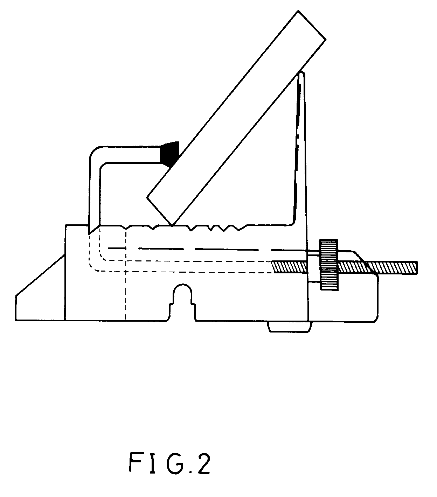

Fig. 2 shows another structure of bench saw according to the prior art;
Fig. 3 is an elevational view of a workbench for a bench saw according to the present invention;
Fig. 4 is an elevational view of a bench saw according to the present invention;
Fig. 5 is an exploded view of the bench saw shown in Figure 4;
Fig. 6 is a sectional view taken on Figure 3 along the direction W;
Fig. 6A is an enlarged view showing the positioning of the rear table board on the slide plate according to the present invention;
Fig. 7 is a sectional view of the bench saw according to the present invention, showing the suspension arm received below the front table board;
Fig. 8 is similar to Figure 7 but showing the lever moved to lift the hacksaw;
Fig. 9 is a sectional view taken on Figure 4 along the direction V;
Fig. 10 shows the suspension arm relative to the front table board to adjust the angle of the hacksaw according to the present invention;
Fig. 10A is similar to Figure 10 but showing the suspension arm crossed over the front table board at the bottom according to the present invention;
Fig. 11 shows the workpiece held at a tilt angle by the workpiece fixture according to the present invention;

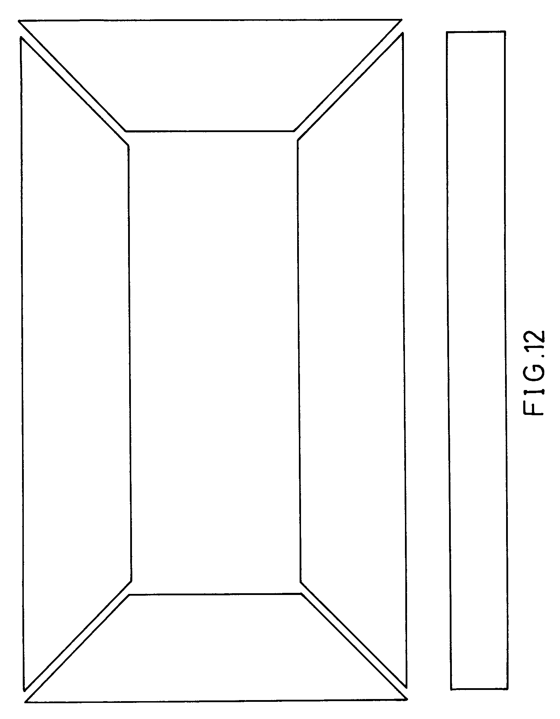

Fig. 12 shows a product made out of wood by the bench saw of the present invention; and

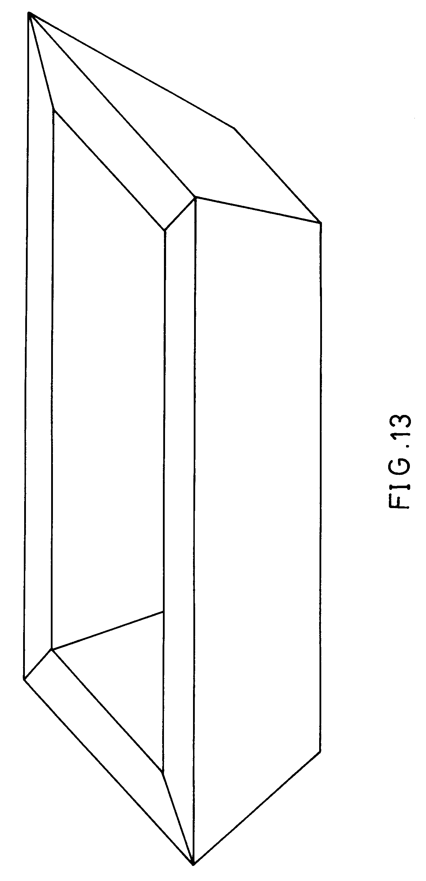

Fig. 13 shows another product made out of wood by the bench saw of the present invention.

### DETAILED DESCRIPTION OF THE PREFERRED EMBODIMENT

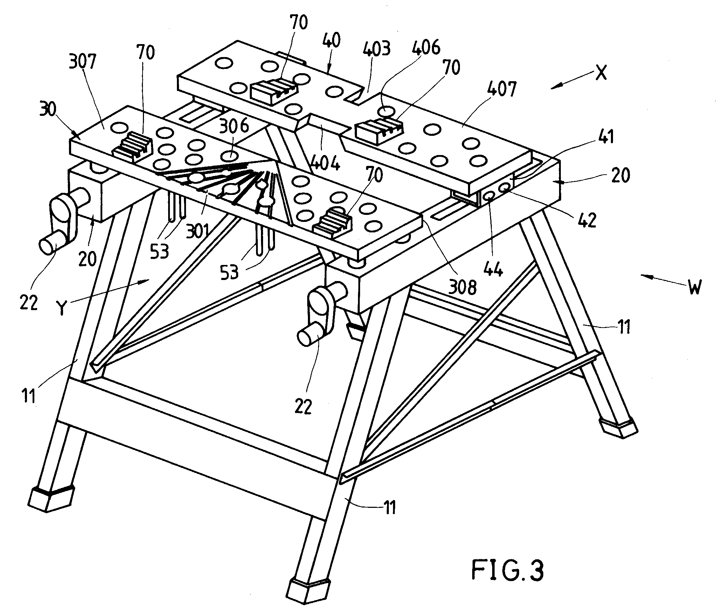

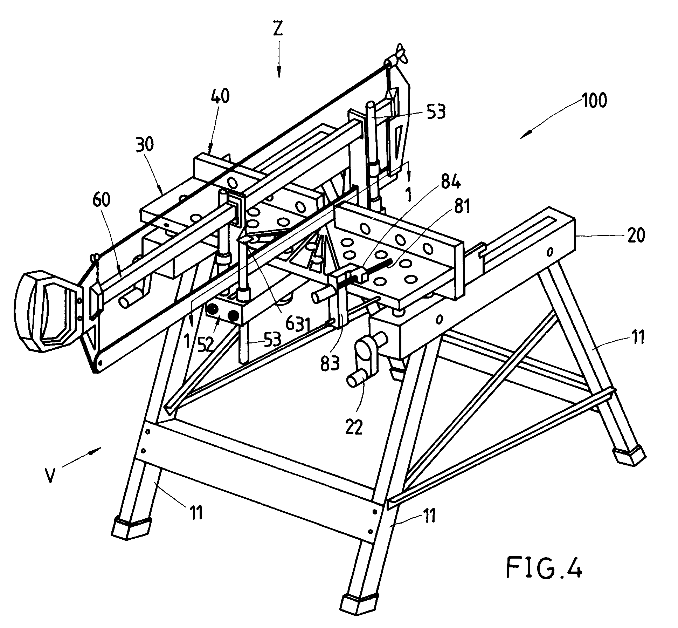

Referring to Figures 3, 4, and 5, a bench saw, referenced by 100, in accordance with the present invention comprises mainly two symmetrical stands 10 joined together, one pair of screw rod mounts 20, a front table board 30, a rear table board 40, a saw rack 50, a hacksaw 60, a plurality of jaw plates 70, and a workpiece fixture 80. The stands 10 comprise four stand legs 11 (made from rectangular bars) connected together to support the screw rod mounts 20. The screw rod mounts 20 are mounted on the stands 10 at the top to hold a respective screw rod 21. The front table board 30 is fixedly mounted on the screw rod mounts 20 at the top near the front end, comprising an axle hole 309, a plurality of elongated grooves 301 made on the top side 307 thereof and respectively radially extended from the mid point of the back side 308 thereof, a plurality of receiving holes 302 on the bottom side thereof (not shown) corresponding to the elongated grooves 301, two symmetrical positioning holes 303 on the bottom side thereof, two transverse locating holes 304 and two longitudinal locating holes 305 on the bottom side thereof, three rows of longitudinally aligned jaw plate mounting holes 306 on the top side 307 thereof, and two screw holes 311 spaced on the front side thereof.

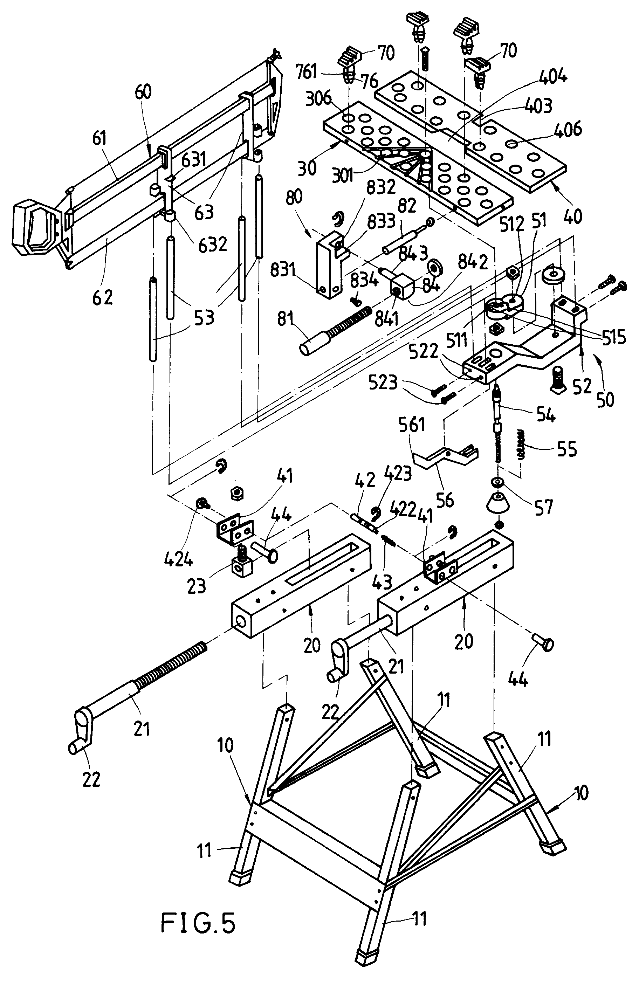

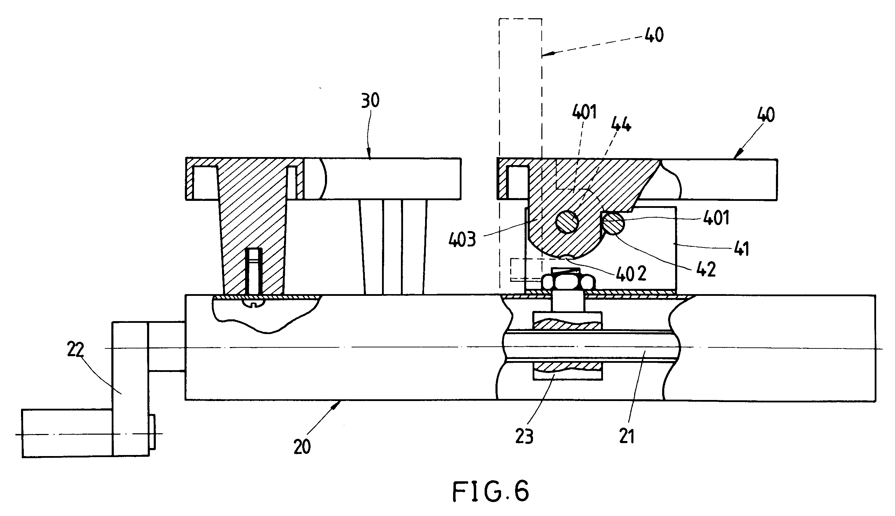

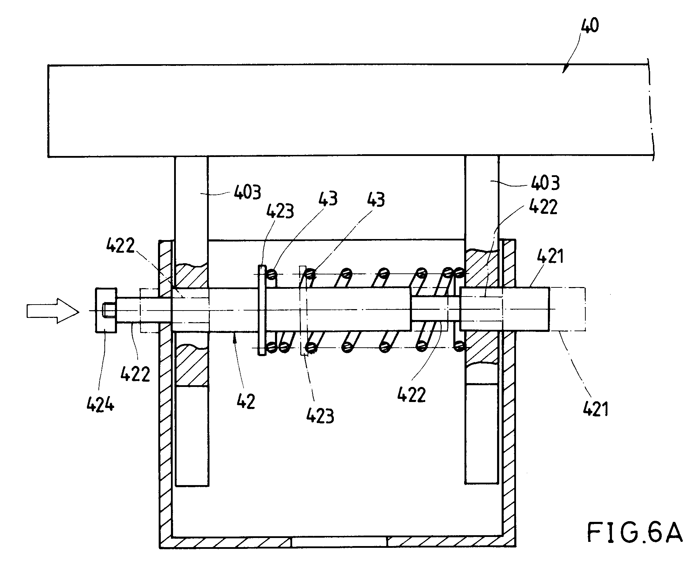

Referring to Figures 6 and 6A and Figure 5 again, the rear table board 40 has two pairs of bottom lugs 403 respectively pivotally connected to two slide plates 41, which are made to slide on the screw rod mounts 20 respectively, and a plurality of jaw plate mounting holes 406 on the top side 407 thereof. The bottom lug 403 has a first locating notch 401 and a second locating notch 402 disposed at right angles. The slide plate 41 is made from a channel plate having a pivot 44 and a lock pin device 42 transversely disposed at two opposite sides. The pivot 44 is inserted through a hole (not shown) on either bottom lug 403, and therefore the rear table board 40 is pivotally connected to the slide plate 41. When the lock pin device 42 is engaged with the first locating notches 401 of either pair of bottom lugs 403, the rear table board 40 is locked at the horizontal position. When the lock pin device 42 is engaged with the second locating notches 402 of either pair of bottom lugs 403, the rear table board 40 is locked at the vertical position. The lock pin device 42 comprises an elongated pin body 422 having two neck portions 421, a knob 424 fastened to the pin body 422 at one end and disposed outside the respective slide plate 41, a clamp 423 fastened to the pin body 422 between the neck portions 421 and disposed inside the respective slide plate 41, and a spring 43 mounted around the pin body 422 and stopped between the clamp 423 and one side wall of the respective slide plate 41. When the knob 424 is depressed, the neck portions 422 become aligned with either pair of bottom lugs 403, permitting the rear table board 40 to be turned between the horizontal position and the vertical position. The screw mount 20 comprises a screw rod 21 inserted into a longitudinal through hole (not shown) thereof. The screw rod 21 has one end coupled with a crank 22 for turning, and an opposite end threaded into a screw hole (not shown) on a rectangular block 23 being disposed in a longitudinal sliding groove of the respective screw rod mount 20 to hold either slide plate 41. When the crank 22 is turned in either direction, the rectangular block 23 is driven to move the respective slide plate 41, and therefore the rear table board 40 is moved toward or apart from the front table board 30.

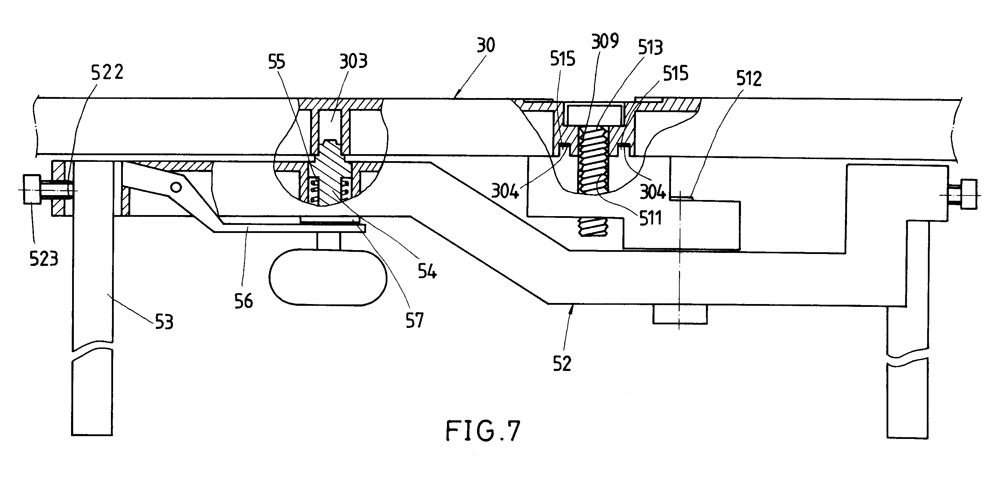

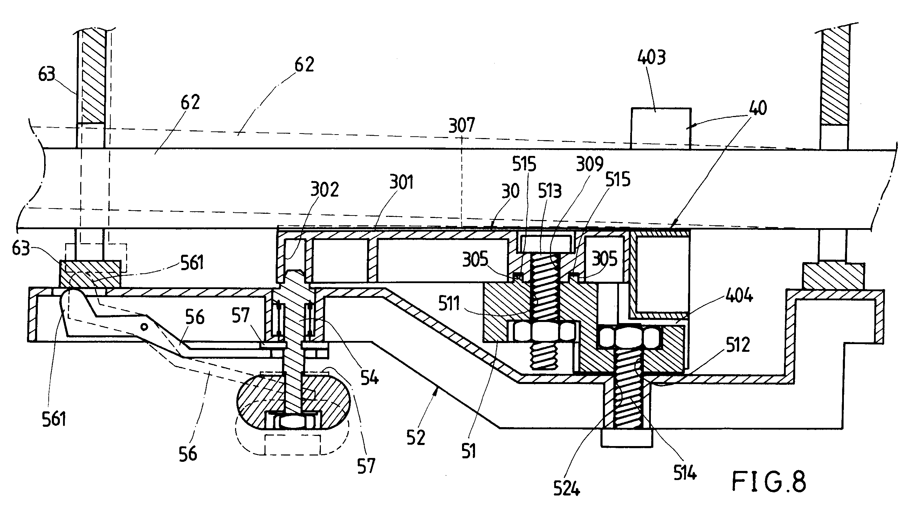

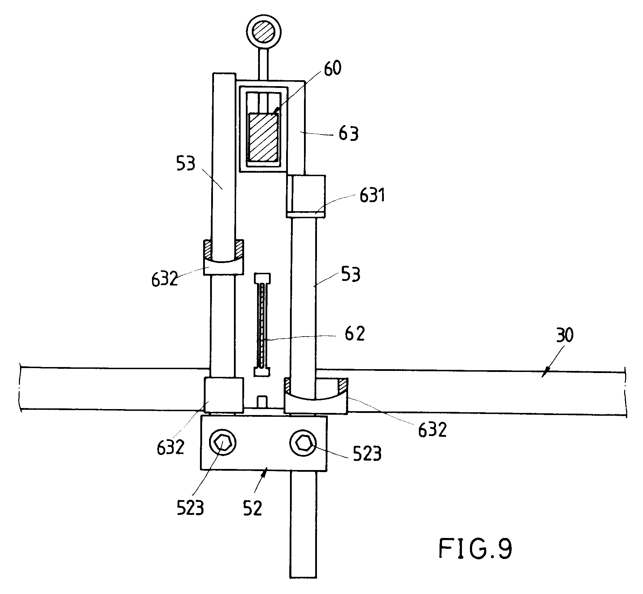

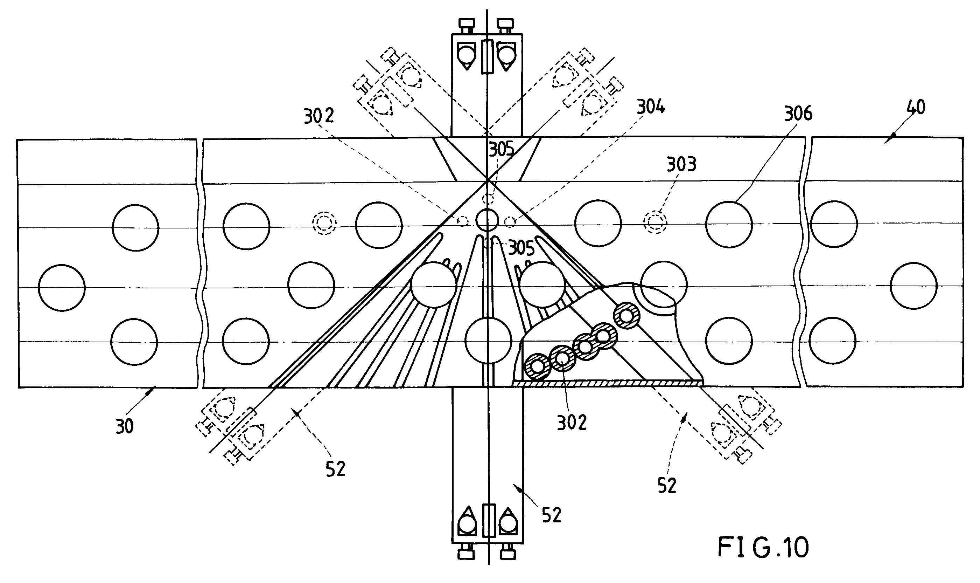

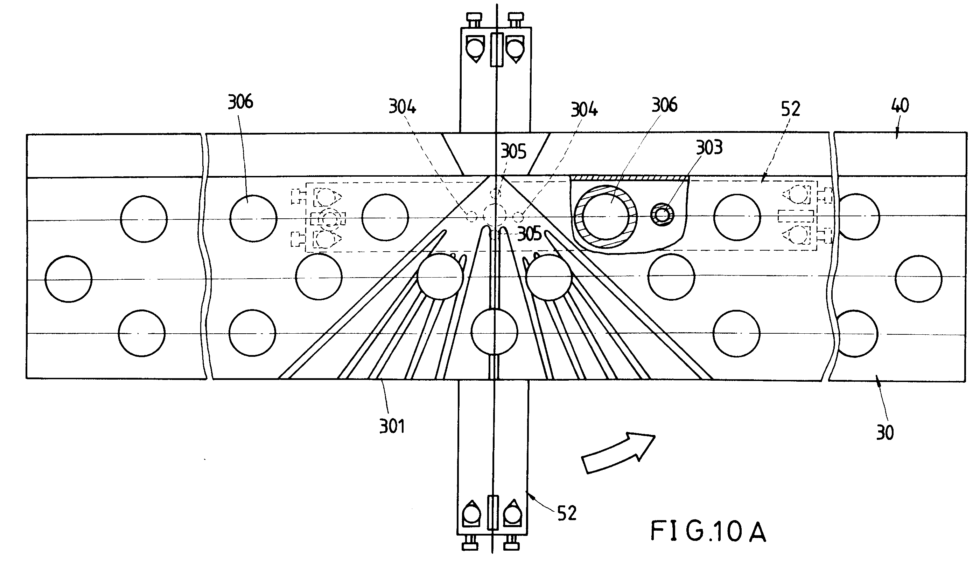

Referring to Figures 7, 8, 9, 10 and 10A and Figure 5 again, the saw rack 50 comprises a link 51, a suspension arm 52, four guide rods 53, an angle lock pin 54, a spring 55, and a lever 56. The link 51 comprises a first axle hole 511 connected to the axle hole 309 on the front table board 30 by a first screw rod 513, a second axle hole 512 connected to an axle hole 524 on the suspension arm 52 by a second screw rod 514. Therefore, the suspension arm 52 can be turned about the second screw rod 514 beneath the front table board 30 and the link 51. The link 51 further comprises two raised portions 515 respectively fitted into the transverse locating holes 304 or longitudinal locating holes 305 on the front table board 30, and therefore the link 51 can be fastened to the front table board 30 at the bottom in the transverse or longitudinal direction. When the link 51 is fastened to the front table board 30 in the longitudinal direction, the second axle hole 512 becomes aligned with the connected point of the elongated grooves 301. The suspension arm 52 is turned about the second screw rod 514 on the second axle hole 512. The angle lock pin 54 is perpendicularly mounted on the suspension arm 52. The spring 55 is mounted around the angle lock pin 54 and retained in place by a clamp 57. By means of the spring force of the spring 55, the angle lock pin 54 is forced into either receiving hole 302 or positioning hole 303 on the front table board 30 to fix the suspension arm 52 to the front table board 30 at the bottom at a desired position. The suspension arm 52 comprises two pairs of pentagonal through holes 521 vertically disposed at two opposite ends thereof, two pairs of screw holes 522 horizontally disposed on two opposite ends thereof and respectively communicated with either pair of pentagonal through holes 521. The four guide rods 53 are respectively inserted through the pentagonal through holes 521. Four hexagonal head screws 523 are respectively threaded into the screw holes 522 to hold down the guide rods 53 in the pentagonal through holes 521. The lever 56 is a first order lever having the fulcrum pivotally connected to the suspension arm 52, the end of effort linked to the angle lock pin 54, and the end of load 561 stopped against the hacksaw 60. When angle lock pin 54 is pulled downwards, the end of load 561 of the lever 56 is moved upwards. The hacksaw 60 comprises a saw frame 61, a saw blade 62 set in the saw frame 61, a handle 64 fixed to the saw frame 61 at one end, and two guide rod holder plates 63 movably mounted on the saw frame 61 to hold the guide rods 53. The guide rod holder plate 63 which is disposed closer to the handle 64 is stopped above the end of load 561 of the lever 56. Furthermore, the guide rod holder plate 63 has three barrels 632 disposed at two opposite sides, which receive either two guide rods 53. When installed, the saw frame 61 is reciprocated by the handle 64 relative to the guide rod holder plates 63.

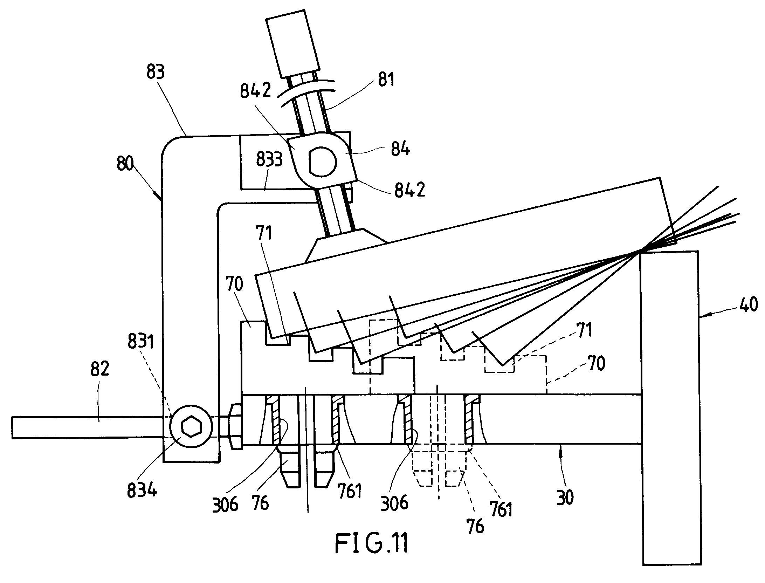

Referring to Figure 11 and Figure 5 again, the jaw plate 70 has a plurality of grooves 71 rising one behind another at the top, and a split plug rod 76 at the bottom for fitting into either jaw plate mounting hole 306 or 406. The split plug rod 76 has an outward flange 761 around the periphery thereof. When the jaw plate 70 is released from the hand after the split plug rod 76 was compressed inwards and inserted through either jaw plate mounting hole 306 or 406, the outward flange 761 becomes stopped below the respective jaw plate mounting hole 306 or 406 causing the jaw plate 70 retained in position.

Referring to Figures 5 and 11 again, the workpiece fixture 80 comprises a clamp screw 81, a locating rod 82 fastened to either screw hole 311 on the front side of the front table board 30, a L-shaped slide bar 83, and a guide block 84. The guide block 84 has a screw hole 841 through two opposite side walls thereof, two angled edges 842, and a side extension rod 843. The L-shaped slide bar 83 comprises a first through hole 831 at one end, which receives the locating rod 82, a second through hole 832, which receives the side extension rod 843, a plane 833 adjacent to the second through hole 832, which engages with either angled edge 842 of the guide block 84 to limit the moving range of the cramp screw 81, and a tightening-up screw 834 perpendicularly threaded into the first through hole 831 to fix the connection between the L-shaped slide bar 83 and the locating rod 82.

Referring to Figure 3, the rear table board 40 can be set in the horizontal position and moved forwards and backwards relative to the front table board 30 so that the bench saw can be served as a work bench after the removal of the hacksaw 60. In order not to hinder the movement of the rear table board 40, the four guide rods 53 must be adjusted to the elevation below the front and rear table boards 30 and 40 by loosening the hexagonal head screws 523 and then fixed again after the adjustment. The link 51 and the suspension arm 52 are then adjusted to the longitudinal direction in parallel with the front table board 30 as shown in Figure 7, permitting the two raised portions 515 of the link 51 to fit into the two transverse locating holes 304 respectively and permitting the angle lock pin 54 to engage either positioning hole 303 on the front table board 30. Therefore, the link 51 and the suspension arm 52 are received below the front table board 30 without hindering any work on the front and rear table boards 30 and 40.

When the bench saw is to be set for making things out of wood or other materials, the rear table board 40 is set at the vertical position with the top side 407 matched with the back side 308 of the front table board 30, then the raised portions 515 of the link 51 are removed from the transverse locating holes 304 and then fitted into the longitudinal locating holes 305 permitting the second axle hole 512 of the link 51 to be disposed with the back side 407 of the rear table board 40 on the same plane, and therefore the suspension arm 52 can be turned horizontally about the central axis of the second axle hole 512. The four guide rods 53 are respectively adjusted to proper elevations and inserted into the barrels 632 of the guide rod holder plates 63 to hold the hacksaw 60 in place. The rear table board 40 has a notch 404 on the front side thereof in the middle for moving the saw blade 62. When to cut the workpiece at a specific angle, the angle lock pin 54 is pulled downwards and moved from one receiving hole 303 to another. As the angle lock pin 54 is pulled downwards, the end of load 561 of the lever 56 is forced to lift the matched guide rod holder plate 63 causing the saw blade 62 moved away from the top side 307 of the front table board 30, and then the suspension arm 52 is turned horizontally to move the hacksaw 60 to the desired cutting angle. When the hacksaw 60 is moved to the desired cutting angle, the angle lock pin 54 is released from the hand, and therefore the angle lock pin 54 is immediately forced by the spring 55 to engage the designated receiving hole 302. When the angle lock pin 54 is inserted into the designated receiving hole 302, the end of load 561 of the lever 56 is moved down, causing the hacksaw 60 lowered down, and therefore the teeth of the saw blade 62 become disposed in the corresponding elongated groove 301 and the cutting work can be started.

The guide rod holder plates 63 further comprise each a stop strip 631 to limit the lower dead point of the cutting of the hacksaw 60. The guide rod holder plates 63 are disposed in reversed directions so that the stop strips 631 thereof are disposed diagonally. When the vertical distance between the bottom side of either stop strip 631 (namely, the top end of the corresponding guide rod 53) and the ends of the teeth of the saw blade 62 is equal or longer than the projecting portion of the corresponding guide rod 53 over the top side 307 of the front table board 30, the workpiece can then be cut off. By adjusting the elevations of the two guide rods 53 which match with the strop strips 631 respectively, the lower dead point of the cutting of the hacksaw 60 is adjusted.

Referring to Figure 11, by mounting the jaw plates 70 on the jaw plate mounting holes 306 on the front table board 30, the workpiece can be supported on the jaw plates 70 and the rear table board 40 at a tilted position. The tilt angle of the workpiece can be adjusted by changing the positions of the jaw plates 70 on the front table board 30 or changing the position of the workpiece on the grooves 71 of the jaw plates 70. Therefore, the hacksaw 60 can be adjust to cut things at any of a variety of angles. Furthermore, by adjusting the L-shaped slide bar 83 of the workpiece fixture 80, the side extension rod 843 of the guide block 84 can be moved deeper into the space above the top side 307 of the front table board 30, and therefore the clamp screw 81 can be adjusted to the clamping position perpendicular to the tilted workpiece to hold down the tilted workpiece in position.

## Claims

1. A bench saw comprising two symmetrical stands joined together, one pair of screw rod mounts, a front table board, a rear table board, a saw rack, a hacksaw, and a workpiece fixture, wherein said screw rod mounts are mounted on said symmetrical stands at the top; said front table board is horizontally fixedly mounted on said screw rod mounts at a front side; said rear table board is coupled to two slide plates being respectively received in a respective longitudinal sliding way on either screw rod mount and moved forwards and backwards relative to said front table board; said saw rack is mounted on said front table board at the bottom; said hacksaw is movably supported on said saw rack and disposed above said front table board; said jaw plates are respectively mounted on said front and rear table boards; said workpiece fixture is mounted on a front side of said front table board to hold down the workpiece.

2. The bench saw of claim 1 wherein said rear table board can be turned from a horizontal position to a vertical position perpendicularly matched with said front table board.

3. The bench saw of claim 1 wherein said rear table board has two opposite pairs of bottom lugs respectively pivotally connected to said slide plates by pivot means and alternatively locked at the horizontal or vertical position by lock means, said bottom lugs having each two notches at right angles alternatively engaged with said lock means to hold said rear table board at the horizontal or vertical position.

4. The bench saw of claim 1 wherein said lock means comprises two lock pin devices respectively mounted on said slide plates, each lock pin device comprising an elongated pin body having two neck portions spaced at a pitch equal to that between either pair of bottom lugs of said rear table board, a knob fastened to said pin body at one end and disposed outside the respective slide plate, a clamp fastened to said pin body between said neck portions and disposed inside the respective slide plate, and a spring mounted around said pin body and stopped between said clamp and one side wall of the respective slide plate.

5. The bench saw of claim 1 wherein said saw rack comprises a link and a suspension arm, said link having a first axle hole connected to an axle hole on said front table board by a first screw rod, a second axle hole connected to an axle hole on said suspension arm by a second screw rod, two raised portions alternatively fitted into two transverse locating holes or two longitudinal locating holes on said said front table board.

6. The bench saw of claim 5 wherein said saw rack further comprises an angle lock pin vertically mounted on said suspension arm and supported on a spring to engage either of a series of receiving holes on said front table board, and a lever pivotally connected to said suspension arm, said lever being a first order lever having the fulcrum pivotally connected to said suspension arm, the end of effort linked to said angle lock pin, and the end of load stopped against said hacksaw at the bottom.

7. The bench saw of claim 5 wherein said suspension arm comprises two opposite pairs of through holes at two opposite ends thereof to hold two pairs of guide rods for holding said hacksaw, and two pairs of tightening up screws controlled to hold down said guide rods in the through holes at desired elevations.

8. The bench saw of claim claim 6, wherein said front table board has two receiving holes spaced at two opposite sides at the bottom for alternatively receiving said angle lock pin permitting said suspension arm and said link to be received below said front table board.

9. The bench saw of claim 1 wherein said front table board comprises a plurality of elongated grooves horizontally disposed through a top wall thereof at different angles for receiving the cutting edge of the saw blade of said hacksaw alternatively during the cutting operation of said hacksaw.

10. The bench saw of claim 7 wherein said hacksaw comprises two guide rod holder plates respectively mounted on said guide rods, each guide rod holder plate comprising three barrels, which receive either pair of guide rods, and a stop strip, which stops a corresponding guide rod at the top.

11. The bench saw of claim 1 wherein each jaw plate comprises a split plug rod at the bottom for fitting into either of a plurality of longitudinal series of jaw plate mounting holes on said front or rear table board.

12. The bench saw of claim 11 wherein each jaw plate further comprises a plurality of grooves rising one behind another at the top for alternatively supporting the workpiece at a different tilt angle.

13. The bench saw of claim 11 wherein each jaw plate further comprises an outward flange around the periphery of the respective split plug rod, which passes through either jaw plate mounting hole when the split plug rod is compressed radially and, which engages with said front or rear table board at the bottom after its insertion through either jaw plate mounting hole.

14. The bench saw of claim 1 wherein said workpiece fixture comprises a clamp screw, a locating rod fastened to a screw hole on a front side of said front table board, a L-shaped slide bar turned about said locating rod and fixed in position by a tightening up screw to hold said clamping screw by a guide block.

15. The bench saw of claim 14 wherein said L-shaped slide bar can be moved forwards to let said guide block be disposed above said front table board so that said clamp screw can hold down the workpiece at a tilted position.

16. The bench saw of claim 14 wherein said L-shaped slide bar has a plane at the top, said guide block has two angled edges alternatively matched with the plane on said L-shaped slide bar to control the moving range of said clamp screw.
